# EUROPEAN PATENT APPLICATION

(11) **EP 2 759 234 A1**
(43) Date of publication of application: **30.07.2014**
(21) Application number: 13152695.6
(22) Date of filing: 25.01.2013
(51) Int. Cl.: A47J 31/40, B67D 1/00

(54) **Connector assembly for use in vehicle for beverage preparation**

(71) Applicant: Friesland Brands B.V., 3818 LE Amersfoort (NL)
(72) Inventor: Bongers, Cornelis Margaretha Theodorus Maria, 5708ZP Helmond (NL)
(74) Representative: Nederlandsch Octrooibureau

(57) **Abstract**

Connector assembly for use in a beverage preparation assembly, comprising
a mixing component (19),
a main ingredient supply line (20) connected to the mixing component (19),
one or more additional ingredient supply lines (21 a, 21b) connected to the mixing component (19) downstream of the main ingredient line (20),
an air supply line (22) connected to the mixing component (19) downstream of the one or more additional ingredient supply lines (21a, 21b).

## Description

### Field of the invention

The present invention relates to a connector assembly for use in a vehicle for preparing a beverage. In a further aspect, the present invention relates to a method for mixing a beverage using the connector assembly.

### Prior art

International patent publication WO2012/134296 discloses a sales outlet for vending beverages, and a method for monitoring a supply chain. In one embodiment, the sales outlet is part of a mobile vehicle, such as a small truck, a motor or scooter.

Mixing and supply of beverage ingredients can be accomplished in many ways. The international patent publication WO2012/134295 e.g. discloses a container suitable for supply and preparation of dairy based beverages.

### Summary of the invention

The present invention seeks to provide an improved device for connecting various ingredient sources in a beverage preparation assembly.

According to the present invention, a connector assembly is provided for use in a beverage preparation assembly, comprising a mixing component, a main ingredient supply line connected to the mixing component, one or more additional ingredient supply lines connected to the mixing component downstream of the main ingredient line, an air supply line connected to the mixing component downstream of the one or more additional ingredient supply lines. This allows for the use of simple and easy to manufacture components, which are easily to assemble and to replace (e.g. during use of the beverage preparation assembly). Furthermore, the specific location of the connected supply lines allows for a type of operation ensuring proper separation of ingredient from one serving of a beverage to the next.

In a further embodiment, the mixing component comprises an inlet part having a main input port connected to the main ingredient supply line, and an additional input port connected to the one or more additional ingredient supply lines, and an outlet part having an air inlet port connected to the air supply line. Again, these components are easy to manufacture and assemble, and can be machined to perform the various functions needed in the mixing component.

The outlet part has an inner diameter near the air inlet port which is larger than an outer diameter of the inlet part, the inlet part being provided with a plurality of air inlet apertures at its circumference. This creates a space between inlet part and outlet part in communication with the air inlet port, allowing even distribution of pressurized air to the air inlet apertures, providing a very good mixing and foaming action of the mixing component.

In a further embodiment, he inlet part comprises a distal part downstream of the plurality of air inlet apertures, the inner diameter of the distal part being gradually decreasing in the flow direction. This provides for a pressure increase and a sudden decrease when the beverage in preparation enters the outlet part, resulting in a very efficient foaming action. The changing diameter can be a slope, a curved inner surface, and even a stepped inner profile is possible.

In order to prevent any mixed product from entering a previous (upstream) part of the connector assembly, the additional input port and air inlet port are provided with one-way valves.

In a further embodiment the one or more additional ingredient supply lines are connected to a connector block. The connector block may comprise a separate air duct to which the air supply line is connected. This allows to have an assembly of additional ingredient supply to an assembly to which the main ingredient is fed and wherein all ingredient are mixed.

The one or more additional ingredient supply lines may comprise a primary additional ingredient supply line and one or more secondary additional ingredient supply lines, wherein the one or more secondary additional ingredient supply lines are connected to secondary input ports of the connector block positioned downstream from a primary input port of the connector block. This allows e.g. to provide a beverage preparation assembly using a main ingredient (dairy product such as milk), and several types of additional beverage ingredients (a sweetener, e.g. four flavors, and optionally a viscosity agent), allowing preparation of a wide variety of beverages.

Again, to prevent cross-contamination between servings of different beverages, each of the primary input port and one or more secondary input ports of the connector block are provided with one-way (e.g. duck bill) valves.

In an even further embodiment, the connector assembly further comprises a base part providing support for the combination of main ingredient supply line and mixing component, and a sliding part providing support for the combination of the connector block, the air supply line and the one or more additional ingredient supply lines, the sliding part being moveable with respect to the base part for connecting and disconnecting the connecting block to the additional ingredient input port and air inlet port on the mixing component. This allows separate handling of the components attached to the base part and sliding part, and e.g. allows the inlet part and outlet part to be daily disposable items.

In a further aspect, the present invention relates to a method for mixing a beverage using a connector assembly according to any one of the embodiments described above, the method comprising pumping a main beverage ingredient into a main ingredient supply line during a first time period (Tds-Tde), pumping one or more additional beverage ingredients into additional beverage ingredient supply lines during a second time period (Tss-Tse), wherein the first time period (Tds-Tde) starts before and ends after the second time period (Tss-Tse). This allows to use the main ingredient (dairy) as being the first and last ingredient flowing through the connector assembly, allowing to flush the connector assembly with the same ingredient for each beverage preparation.

In an embodiment, the method further comprises pumping a primary additional beverage ingredient into a primary additional beverage supply line during the second time period (Tss-Tse), pumping one or more secondary additional beverage ingredients into secondary additional beverage ingredient supply lines during a third time period (Tf1s-Tf1e; Tf2s-Tf2e), wherein the second time period (Tss-Tse) starts before and ends after the third time period (Tf1s-Tf1e; Tf2s-Tf2e). Again, this allows to use a similar flushing capability in the connector block, e.g. always using a sweetener agent as first and last ingredient to flow through the connector block.

In an even further embodiment, the method further comprises providing pressurized air to the air supply line. This can be during any period, e.g. during the first time period, but also possibly before and/or after the first time period, allowing also to substantially blow the mixing component empty after a beverage preparation. Furthermore, the air supply can be controlled to be intermittent, or to change in intensity and/or pressure over time, allowing to fine tune the mixing and/or foaming effect from the air and the mixing component.

### Short description of drawings

The present invention will be discussed in more detail hereinafter based on a number of exemplary embodiments with reference to the drawings, in which
Fig. 1 shows a schematic overview of a vehicle for beverage preparation in which the connector assembly embodiments according to the present invention are used;
Fig. 2 shows a perspective view of an embodiment of a connector assembly according to the present invention;
Fig. 3 shows a perspective cross sectional view of the connector assembly shown in Fig. 2;
Fig. 4 shows a cross sectional view of an embodiment of a mixing component according to the present invention;
Fig. 5 shows a cross sectional view perpendicular to the cross sectional view of Fig. 4;
Fig. 6 shows a partial cross sectional view of an embodiment of a mixing component according to the present invention;
Fig. 7 shows a timing diagram of an embodiment of a method for mixing a beverage using a connector assembly according to the present invention.

### Detailed description of exemplary embodiments

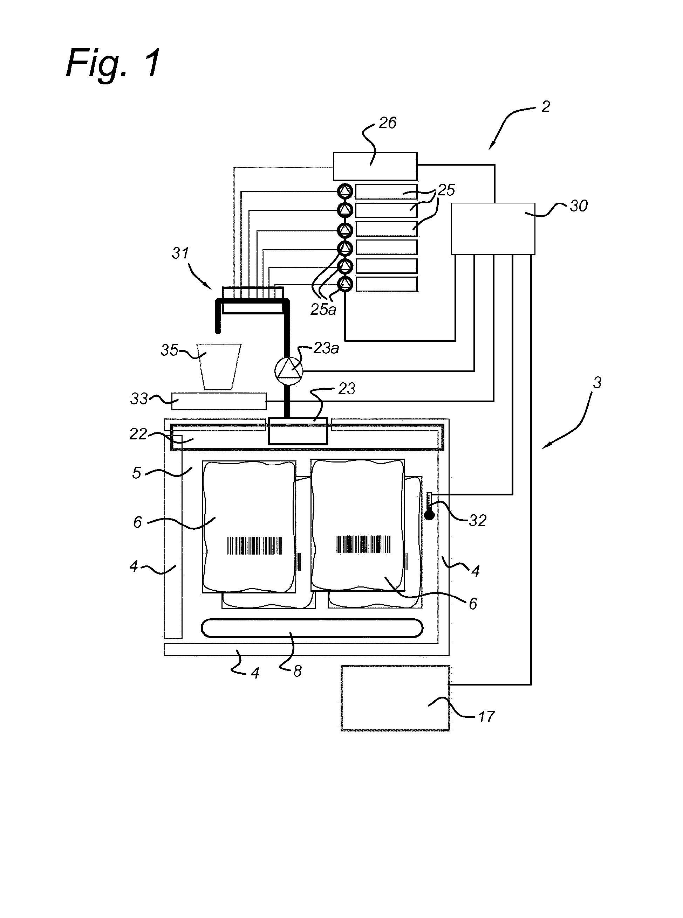

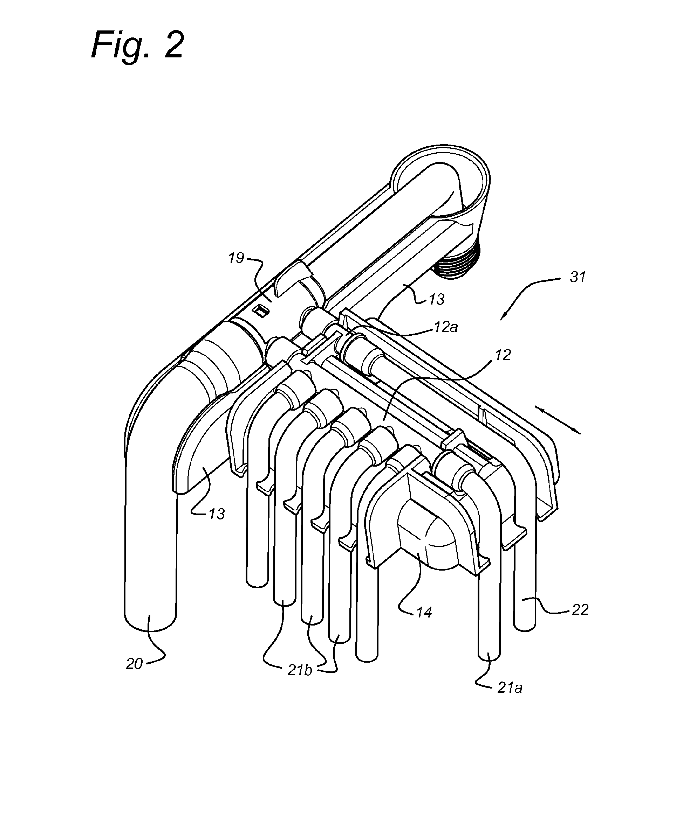

The present invention relates to a solution of providing mobile delivery of beverages, such as dairy based beverages, to customers, and more specifically to a specific component used therefore. The goal is of course to make sure the beverage is prepared properly, and to make sure that all ingredients are kept sufficiently cool and hygienic until consumption by the customer. In the present application, embodiments are described of a connector assembly allowing proper mixing of ingredients of the beverage right before serving of the beverage. This element is indicated as connector assembly or mixing unit 31 in the description below. Fig. 1 shows a schematic view of major components of an embodiment of a beverage preparation assembly 2 according to the present invention, comprising a beverage preparation assembly 2 for local beverage preparation, e.g. using a small vehicle 1 (see also Fig. 2-4). The vehicle 1 comprising a frame body 3, the frame body 3 having a plurality of walls 4 providing structural strength to the vehicle 1 and forming a main internal space 5 for accommodating at least one main beverage ingredient package 6. The plurality of walls 4 comprise thermally insulating material, in order to keep the contents of the main beverage ingredients 6 in the main internal space 5 cool during a long period.

In the schematic view as shown, the beverage preparation assembly 2 comprises a cooling element 8 disposed in the internal space 5 for cooling the internal space 5 and its contents, i.e. the at least one main beverage ingredient package 6, during actual operation. In an embodiment, the cooling element 8 comprises a cooling liquid, known as such, or even blocks of ice, and passively cools the internal space 5. In another embodiment, the cooling element 8 may be an active component using e.g. electric power for actively cooling the internal space 5.

A first connection unit 23 is provided in the frame body 3, e.g. on the top side thereof, and is connected to the at least one main beverage ingredient package 6. The at least one main beverage ingredient package 6 may comprise a bag containing a main beverage ingredient and a cassette holding the bag ('bag-in-box'). The first connection unit 23 may therefore be referred to as a "bag-in-box" connector (BIB). Typically, the at least one main beverage ingredient package 6 stores a dairy product such as milk in liquid form, but other liquid ingredients are conceivable. Also other types of containers, cans or even tanks may be used as the main beverage ingredient package 6 in the beverage preparation assembly 2 of the present invention.

The beverage preparation assembly 2 is further provided with a pump 23a disposed between the first connection unit 23 and a mixing unit 31, the pump 23a being arranged for pumping ingredients from the at least one main beverage ingredient package 6 to the mixing unit 31, e.g. implemented as a peristaltic pump. The advantage is that in such a type of pump, the hose used is easily replaceable.

Furthermore, additional beverage ingredient containers 25 are provided and connected the mixing unit 31 via associated pumps 25a disposed between said containers 25 and mixing unit 31. In typical embodiments the additional beverage ingredient containers 25 comprise main ingredient additives such as sweeteners, flavours, colours, structuring agents, viscosity agents and the like.

The beverage preparation assembly 2 is further provided with a pressurized air source 26 connected to the mixing unit 31. The pressurized air source 26 may be a pre-pressurized canister, or a regular air pump.

The mixing unit 31 comprises specially arranged apertures for injecting air (in the form of jets or bubbles) into a beverage being prepared in the mixing unit 31 for serving in a cup 35.

The beverage preparation assembly 2 is also provided with sensor elements 32, such as a thermometer 32 disposed in the internal space 5, and a load cell 33 disposed external to the internal space 5. The load cell 33 is positioned in the frame body 3 such that the weight (or weight increase) of the cup 35 can be monitored during operation

A control unit 30 is further provided as part of the beverage preparation assembly 2 and is connected to control the pump 23a of the main beverage ingredient, the one or more pumps 25a associated with the additional beverage ingredient containers 25, and the pressurized air source 26. Furthermore, the control unit 31 is connected to the sensor elements 32 and load cell 33.

The pump 23a and one or more pumps 25 a may be any type of pump suitable for pumping the associated fluid or liquid, and e.g. comprise an electrically driven pump. Alternatively, the liquid or fluid in the main beverage ingredient package 6 and additional beverage ingredient containers 25 are pressurized (e.g. using pumps) and the amount delivered to the mixing unit is controlled using appropriate and associated valves.

In actual operation, the beverage preparation assembly 2 is part of a vehicle 1 which is operated by an operator. Customers can order a cup 35 holding a customer specific beverage such as a cold, whipped, milk-based beverage having a specific viscosity and flavour. The cup 35 rests on the load cell 33 next to the mixing unit 31 and below an outlet of the mixing unit 31. Based on customer specifications, the beverage comprises a certain mixture of main and additional ingredients from the at least one main beverage ingredient package 6 and additional beverage ingredient containers 25, and air bubbles or foam injected by the pressurized air source 26. The control unit 30 is responsible for the optimum beverage mixing and delivery by controlling the one or more pumps 23a, 25a based on predetermined parameters and measured signals from the sensor elements 32 and load cell 33. For example, the load cell 33 delivers a weight increase signal to the control unit 30 such that the amount of beverage in the cup 35 can be determined. The control unit 30 further controls the amount of additional ingredients to be mixed and the amount of air to be injected into the beverage.

In an advantageous embodiment, the beverage preparation assembly 2 is further provided with a battery pack 17 which is disposed on or in the frame body 3 external to the internal space 5. The battery pack 17 is arranged for powering one or more electrical components of the beverage preparation assembly 2, e.g. the control unit 30, pumps 23a, 25a and sensor elements 32.

Fig 2. shows a perspective view of an embodiment of a connector assembly 31 for use in a beverage preparation assembly 2, comprising a mixing component 19, a main ingredient supply line 20 connected to the mixing component 19, one or more additional ingredient supply lines 21a, 21b connected to the mixing component 19 downstream of the main ingredient line 20, and an air supply line 22 connected to the mixing component 19 downstream of the one or more additional ingredient supply lines 21a, 21b.

The primary function of the connector assembly 31 shown in Fig. 2 is to mix or combine a main beverage ingredient supplied by the main ingredient supply line 20 with additional beverage ingredients supplied by the one or more additional ingredient supply lines 21a, 21b, followed by air injection into the mixture by the air supply line 22. In typical embodiments, the main beverage ingredient is a dairy product, such as milk in liquid form, and the additional beverage ingredients are sweeteners, flavours and viscosity agents in liquid form. However, other beverage ingredients can also be used during operation of the present invention connector assembly 31:
- functional ingredients (e.g. caffeine, guarana, vitamin complexes, herbal extracts such as ginseng and ashwagandha, etc.);
- structuring agents (e.g. pH induced thickening agent, a calcium induced gelling agent, such as an alginate solution that reacts with calcium ions in the main beverage ingredient, a pectin based ingredient which can provide a gelling effect, and/or CO₂ for carbonation of the beverage).

After the main and additional beverage ingredients have been mixed or combined in the mixing component 19, the air supply line 22 may further supply pressurized air into the mixing component 19, thereby "whipping" the mixture of the main and additional beverage ingredients for preparing a smooth, foamed beverage having a pleasing texture, both aesthetically and taste-wise. Using milk as a main ingredient is particular suited for preparing a smooth and foamed beverage. Note that the mixing of ingredients as well as air injection occurs primarily in the mixing component 19.

Since the primary function of the connector assembly 31 is to mix various beverage ingredients together with (optionally) air injection, the connector assembly 31 of the present invention may also be referred to as a mixing unit 31 or structuring device 31, i.e. mixing various ingredients and foaming said mixture can be viewed as a structure of a beverage.

In the embodiment shown in Fig. 2, the one or more additional ingredient supply lines 21a, 21b are connected to a connector block 12. Furthermore, the connector block 12 comprises a separate air duct 12a to which the air supply line 22 is connected. According to the invention, the connector block 12 allows for simple and convenient connection of the one or more additional ingredient supply lines 21a, 21b and air supply line 22 to the mixing component 19.

The connector assembly 31 may further comprise a base part 13 and a sliding part 14 movably disposed on the base part 13. The base part 13 supports the mixing component 19 (and attached main ingredient supply line 20) and the sliding part 14 supports the connector block 12 (and attached one or more additional ingredient supply lines 21a, 21b and air supply line 22). In the embodiment shown, the sliding part 14 is linearly moveable with respect to the base part 12 as indicated by the two-way arrow.

In other words, Fig. 2 shows a connector assembly 31 further comprising a base part 13 providing support for the combination of main ingredient supply line 20 and mixing component 19, and a sliding part 14 providing support for the combination of the connector block 12, the air supply line 22 and the one or more additional ingredient supply lines 21a, 21b. The sliding part 14 is moveable with respect to the base part 13 for connecting and disconnecting the connecting block 12 to the additional ingredient input port 10b and air inlet port 11a on the mixing component 19.

The sliding part 14 facilities an easy assembly of the mixing component 19 and the connector block 12. For example, the mixing component 19 may be mounted on the base part 13 first, after which the sliding part 14 is positioned away (distally) with respect to the mixing component 19. Then the connector block 12 is mounted on the sliding part 14 and subsequently connected to the mixing component 19 by a simple sliding motion of the sliding part 14 toward (proximally) the mixing component 19. In an advantageous embodiment, the connector block 12 is first connected to the one or more additional ingredient supply lines 21a, 21b and air supply line 22 before mounting the connector block 12 on the sliding part 14.

This assembly also allows to disassemble the mixing component 19 and connector block 12 easily by first sliding the sliding part 14 away (distally) from the mixing component 19 of the base part 13. The mixing component 19 and/or connector block 12 can then be removed from the base part 13 and sliding part 14 respectively. E.g. this allows easy frequent (daily) replacement of only the mixing component 19 and/or main ingredient supply line 20, which in operation are in contact with the (dairy) main ingredient.

In an embodiment, the main and the one or more additional ingredient supply lines 20, 21a, 21b and air supply line 22 are substantially tubular and made of a rigid or resilient plastic material, but other suitable materials known in the food industry are conceivable.

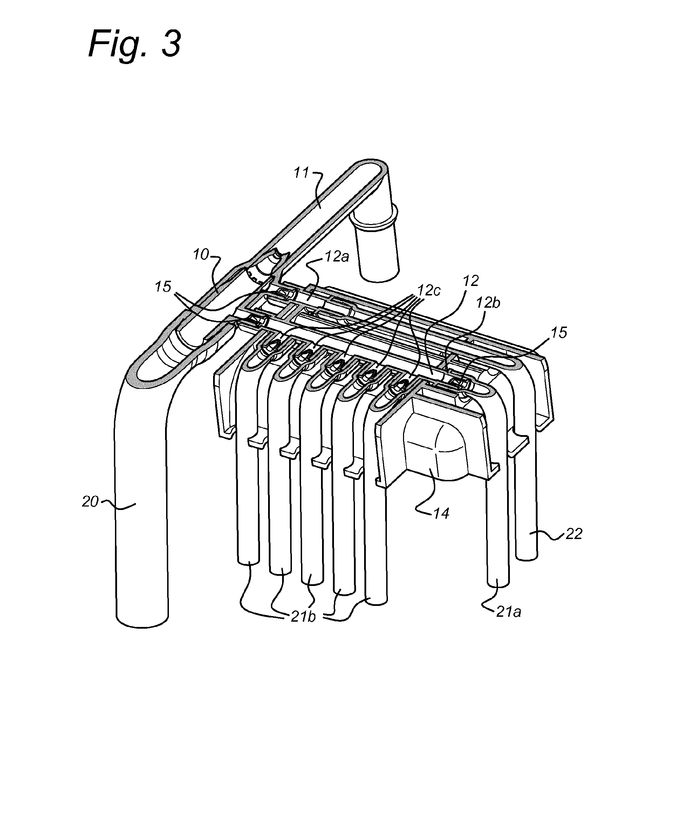

Fig. 3 shows a perspective cross sectional view of an embodiment of a connector assembly 31 according to the present invention. The mixing component 19 connected to the main ingredient supply line 20 is shown in cross section as comprising an inlet part 10, connected to the connector block 12 , and an outlet part 11. The inlet part 10 having a main input port 10a connected to the main ingredient supply line 20, and an additional input port 10b connected to the one or more additional ingredient supply lines 21a, 21b, and the outlet part 11 has an air inlet port 11a connected to the air supply line 22.

The one or more additional ingredient supply lines 21a, 21b comprise a primary additional ingredient supply line 21a and one or more secondary additional ingredient supply lines 21b, wherein the one or more secondary additional ingredient supply lines 21b are connected to secondary input ports 12c of the connector block 12 positioned downstream from a primary input port 12b of the connector block 12.

In a typical embodiment, the primary additional ingredient supply line 21a supplies a sweetener and the one or more secondary additional ingredient supply lines 21b supply flavors (and possibly viscosity (e.g. thickening) agents). In the embodiment shown, five secondary additional ingredient supply lines 21b are provided allowing supply of e.g. four different flavors and one viscosity agent.

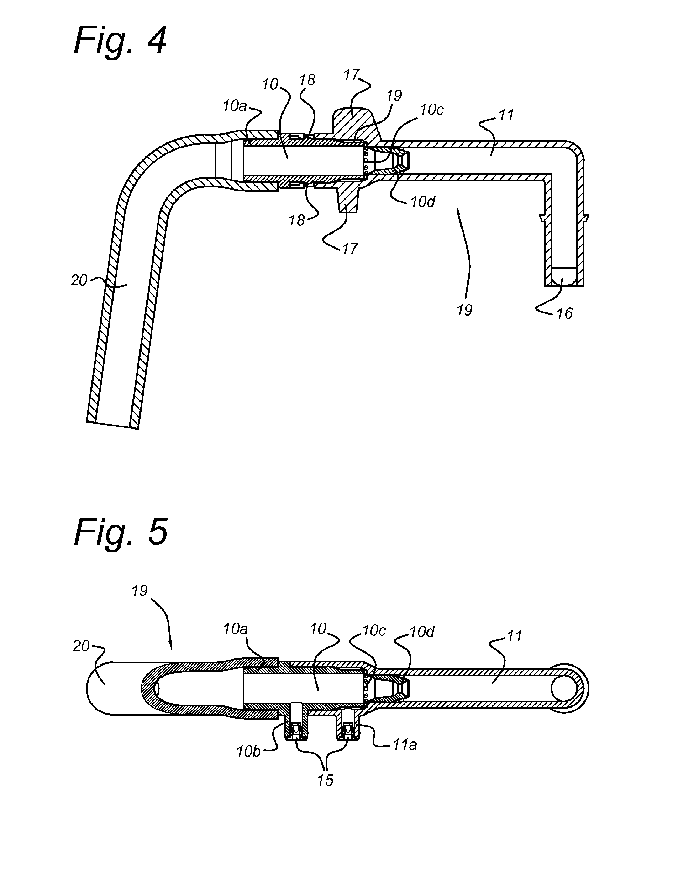

It should be noted that ingredients supplied by the main and the one or more additional ingredient supply lines 20, 21a, 21b, as well as pressurized air supplied by the air supply line 22, flow into the inlet part 10 and the final mixture is dispensed through the outlet part 11. Specific details thereof will be explained with reference to the description of Fig. 4-6 below.

In an embodiment, each of the primary input port 12b and one or more secondary input ports 12c of the connector block 12 are provided with one-way valves 15, such as duckbill valves. The one-way valve 15 provided in the primary input port 12b of the connector block 12 prevents a backflow of ingredients supplied by the one or more secondary additional ingredient supply lines 21b into the primary additional ingredient supply line 21a. Likewise, the one-way valves 15 provided in the one or more secondary input ports 12c of the connector block 12 prevent a backflow of ingredients supplied by the primary additional ingredient supply line 21a into the one or more secondary additional ingredient supply lines 21b. The one-way valves 15 therefore prevent cross contamination of ingredients in additional ingredient supply lines 21a, 21b. For example, it would be undesirable to have a sweetener supplied by the primary additional ingredient supply line 21a flowing back into the one or more secondary additional ingredients supply lines 21b supplying the various flavors. As a result, when a new beverage is requested, the first part of ingredients supplied by the secondary additional ingredient supply lines 21b would comprise a sweetener, which may not have been requested by the customer. Any cross contamination of ingredients therefore biases a desired composition of a beverage ordered by the customer. The use of one-way valves 15 avoids such cross contamination of ingredients. To further enhance this effect, the one-way valves 15 are positioned as close as possible to the lumen of the connector block 12.

Fig. 4 shows a cross sectional view of an embodiment of a mixing component 19 according to the present invention, wherein the mixing component 19 comprises an inlet part 10 having a main input port 10a connected to the main ingredient supply line 20 and a distal part 10d downstream of a plurality of air inlet apertures 10c. The mixing component 19 is further connected to the outlet part 11 which optionally comprises an outlet part restrictor 16. The restrictor 16 can provide an additional foaming/mixing effect just prior to serving of the beverage in the cup 35.

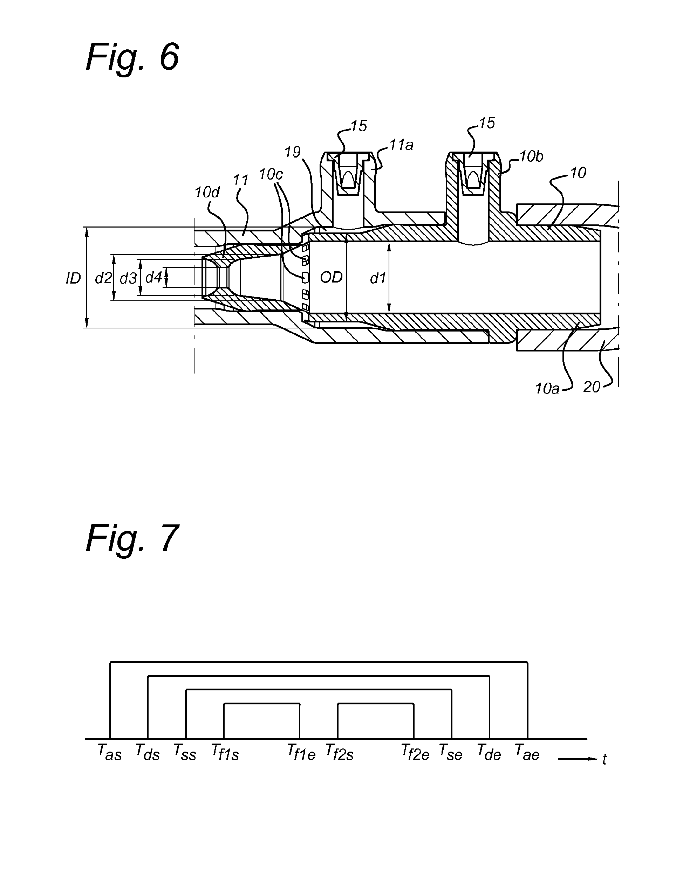

Pressurized air supplied by the air supply line 20 passes through the air inlet apertures 10c, thereby injecting air to the mixture of the main and additional beverage ingredients inside the inlet part 10 during operation. The air inlet apertures 10c and the distal part 10d provide further conditioning of the mixture for preparing a smooth and foamed beverage according to customer specifications (see description of Fig. 6 and 7 below).

Fig. 5 shows across sectional view perpendicular to the cross sectional view of the mixing component 19 shown in Fig. 4. The additional input port 10b and air inlet port 11a are provided with one-way valves 15. The one-way valve 15 provided in the additional input port 10b prevents backflow of the main beverage ingredient supplied by the main ingredient supply line 20 and air supplied by the air supply line 20 into the connector block 12. Likewise, the one-way valve 15 provided in the air inlet port 11a prevents any backflow of the main beverage ingredient supplied by the main ingredient supply line 20 and additional beverage ingredients supplied by the additional ingredient supply lines 21a, 21b into the connector block 12. As explained in foregoing paragraphs, the one-way valves 15 prevent cross contamination of the various supply lines of the connector assembly 31.

Fig. 6 shows a partial cross sectional view of an embodiment of a mixing component 19 according to the present invention, wherein the outlet part 11 has an inner diameter ID near the air inlet port 11a which is larger than an outer diameter OD of the inlet part 10, the inlet part 10 being provided with a plurality of air inlet apertures 10c at its circumference. Since the inner diameter ID is larger that the outer diameter OD, an annular cavity is provided between the inlet and outlet part 10, 11. The annular cavity is in fluid communication with a the plurality of air inlet apertures 10c, i.e. pressurized air enters the annular cavity through the air inlet port 11a and passes through the plurality of air inlet apertures 10c into the mixing component 19 from a plurality of directions on the perimeter of inlet part 10, just upstream of the distal part 10d.

In an embodiment, the inner diameter (d1-d4) of the distal part 10d is gradually decreasing in the flow direction. Note that the flow direction is from right to left in the embodiment shown in Fig. 6.

In an embodiment, the distal part 10b may comprise a uniform taper from the inner diameter d1 to the final inner diameter d4. In another embodiment, the distal part 10b may comprise a stepped taper, i.e. having different tapering portions, or a nonuniform decrease from the inner diameter d1 to the inner diameter d4. In the embodiment shown in Fig. 6, the inner diameter of the distal part first decreases from d1 to d2, then less steeply decreases from d2 to d3, and then decreases with a rounded curve from d3 to d4.

In essence , the distal part 10d provides a flow path constriction that increases the flow speed and (after the smallest diameter d4) suddenly decreases the pressure of a mixture of main and additional beverage ingredients passing through the mixing component 19. As a result, a mixing and foaming action results (the distal part10b acts, for example, as a spray nozzle). Providing the distal part 10d with either a uniform or stepped taper influences the foaming action, allowing to fine tune the functionality of the mixing component 19.

The connector assembly 31 comprises a limited number of components, which each can be made in a cost-effective manner, and allows easy assembly and disassembly when needed, e.g. for maintenance purposes.

The mixing component 19 has been described with reference to the embodiment shown in detail in the drawing of Fig. 4-6. Other types of mixing components 19 may also be used, and, e.g. replace the combination of inlet part 10 and outlet part 11. Such other type of mixture component 19 may e.g. be any of the embodiments described in the international patent application of the same applicant, with publication number WO2011/028117, the contents of which are incorporated herein by reference.

According to a second aspect the present invention relates to a method for mixing a beverage using the connector assembly 31 according to any one of the embodiments described above with reference to Fig. 1-6. Fig. 7 shows a timing diagram of an embodiment of a method for mixing a beverage using the connector assembly 31.

The method comprises: pumping a main beverage ingredient into a main ingredient supply line 20 during a first time period Tds-Tde ('dairy start' - 'dairy end'), pumping one or more additional beverage ingredients into additional beverage ingredient supply lines 21a, 21b during a second time period Tss-Tse ('sweetener start'- 'sweetener end'). The first time period Tds-Tde starts before and ends after the second time period (Tss-Tse).

The pumping action of the ingredients is e.g. controlled using the control unit 30 and pumps 23a, 25a as described above with reference to Fig. 1. In combination with the arrangement of the main input port 10a and additional input port 10b in the inlet part 10, this ensures that the beverage preparation in the mixing component starts and ends with only the main ingredient, preventing cross contamination from one serving of a beverage to the next serving. In a further embodiment the method further comprises pumping a primary additional beverage ingredient into a primary additional beverage supply line 21a during the second time period Tss-Tse, pumping one or more secondary additional beverage ingredients into secondary additional beverage ingredient supply lines 21b during a third time period Tf1s-Tf1e; Tf2s-Tf2e ('flavor *n* start' - 'flavor *n* end'), wherein the second time period Tss-Tse starts before and ends after the third time period Tf1s-Tf1e; Tf2s-Tf2e. Similar to the previous embodiment, the arrangement of the main and secondary additional ingredient supply lines 21a, 21b and the connector block 12, this ensures the ability to control accurately the flow of the various additional ingredient towards the additional input port 10b, preventing cross-contamination of beverage ingredients.

In an even further embodiment, the method further comprises providing pressurized air to the air supply line 22. This could be implemented using any time period during preparation of a beverage: during a continuous time period Tas-Tae ('air start'- 'air end') which spans longer than the first time period Tds-Tde, but also possibly before or after the first time period. Also intermittent supply of air or a change in intensity and/or pressure over time can be implemented using the control unit 30 and pressurized air source 26 (see Fig. 1) to obtain different mixing and foaming effect in the beverage to be prepared.

In Fig. 7 a sample timing diagram is shown: First air supply starts on Tas and lasts continuously until Tae. On Tds, supply of the main ingredient (milk) starts and fills the interior of inlet part 10. On Tss, supply of a sweetener ingredient starts at the main additional ingredient supply port 12b , followed by a supply of a first flavor ingredient on Tf1s (e.g. the first additional ingredient supply port 12c, just downstream of the main additional ingredient supply port 12b). After a set time, supply of the first flavor ingredient ends (Tf1e), and subsequently, a second flavor ingredient is supplied during a set time period Tf2s-Tf2e, e.g. using one of the other additional ingredient supply ports 12c of the connector block 12. During the supply of the flavor ingredients, supply of the sweetener, milk and air continues. Then, in order, the supply of the sweetener ends (Tse), then of the main ingredient (Tde) and lastly the supply of air stops (Tae). This ensures that the lumen of the mixing component 19 downstream of the air inlet ports 10c is (almost) empty, that the interior of the inlet part 10 upstream of the air inlet ports 10c is only filled with the main ingredient, and that the internal lumen of the connector block 12 upstream of the one-way valve 15 in the additional ingredient supply port 10b is filled with the main additional ingredient (sweetener) only.

The present invention embodiments have been described above with reference to a number of exemplary embodiments as shown in the drawings. Modifications and alternative implementations of some parts or elements are possible, and are included in the scope of protection as defined in the appended claims.

## Claims

1. Connector assembly for use in a beverage preparation assembly, comprising
a mixing component (19),
a main ingredient supply line (20) connected to the mixing component (19),
one or more additional ingredient supply lines (21a, 21b) connected to the mixing component (19) downstream of the main ingredient line (20),
an air supply line (22) connected to the mixing component (19) downstream of the one or more additional ingredient supply lines (21a, 21b).

2. Connector assembly according to claim 1, wherein the mixing component (19) comprises an inlet part (10) having a main input port (10a) connected to the main ingredient supply line (20), and an additional input port (10b) connected to the one or more additional ingredient supply lines (21a, 21b), and
an outlet part (11) having an air inlet port (11a) connected to the air supply line (22).

3. Connector assembly according to claim 2, wherein the outlet part (11) has an inner diameter (ID) near the air inlet port (11a) which is larger than an outer diameter (OD) of the inlet part (10), the inlet part (10) being provided with a plurality of air inlet apertures (10c) at its circumference.

4. Connector assembly according to claim 2 or 3, wherein the inlet part (10) comprises a distal part (10d) downstream of the plurality of air inlet apertures (10c), the inner diameter (d1-d4) of the distal part (10d) being gradually decreasing in the flow direction.

5. Connector assembly according to claim 2, 3 or 4, wherein the additional input port (10b) and air inlet port (11a) are provided with one-way valves (15).

6. Connector assembly according to any one of the claims 1-5, wherein the one or more additional ingredient supply lines (21a, 21b) are connected to a connector block (12).

7. Connector assembly according to claim 6, wherein the connector block (12) comprises a separate air duct (12a) to which the air supply line (22) is connected.

8. Connector assembly according to claim 6 or 7, wherein the one or more additional ingredient supply lines (21a, 21b) comprise a primary additional ingredient supply line (21a) and one or more secondary additional ingredient supply lines (21b), wherein the one or more secondary additional ingredient supply lines (21b) are connected to secondary input ports (12c) of the connector block (12) positioned downstream from a primary input port (12b) of the connector block (12).

9. Connector assembly according to claim 8, wherein each of the primary input port (12b) and one or more secondary input ports (12c) of the connector block (12) are provided with one-way valves (15).

10. Connector assembly according to any one of claims 6-9, further comprising a base part (13) providing support for the combination of main ingredient supply line (20) and mixing component (19), and
a sliding part (14) providing support for the combination of the connector block (12), the air supply line (22) and the one or more additional ingredient supply lines (21a, 21b),
the sliding part (14) being moveable with respect to the base part (13) for connecting and disconnecting the connecting block (12) to the additional ingredient input port (10b) and air inlet port (11a) on the mixing component (19).

11. Method for mixing a beverage using a connector assembly according to any one of claims 1-10, the method comprising:
pumping a main beverage ingredient into a main ingredient supply line (20) during a first time period (Tds-Tde),
pumping one or more additional beverage ingredients into additional beverage ingredient supply lines (21a, 21b) during a second time period (Tss-Tse),
wherein the first time period (Tds-Tde) starts before and ends after the second time period (Tss-Tse).

12. The method of claim 11, further comprising
pumping a primary additional beverage ingredient into a primary additional beverage supply line (21a) during the second time period (Tss-Tse),
pumping one or more secondary additional beverage ingredients into secondary additional beverage ingredient supply lines (21b) during a third time period (Tf1s-Tf1e; Tf2s-Tf2e),
wherein the second time period (Tss-Tse) starts before and ends after the third time period (Tf1s-Tf1e; Tf2s-Tf2e).

13. The method of claim 11 or 12, further comprising providing pressurized air to the air supply line (22).
